# FASCICULE DE BREVET EUROPEEN

(11) **EP 3 090 020 B1**
(45) Date de publication et mention de la délivrance du brevet: **13.11.2019**
(21) Numéro de dépôt: 14827841.9
(22) Date de dépôt: 15.12.2014
(51) Int. Cl.: C08L 23/10, C08L 51/06, C08L 87/00

(54) **COMPOSITION THERMOPLASTIQUE À BASE DE POLYPROPYLÈNE ET DE POLYOLÉFINE GREFFÉE POLYAMIDE**
THERMOPLASTISCHE ZUSAMMENSETZUNG AUS POLYPROPYLEN UND POLYAMIDGEPFROPFTEM POLYOLEFIN
THERMOPLASTIC COMPOSITION MADE OF POLYPROPYLENE AND POLYAMIDE-GRAFTED POLYOLEFIN

(30) Priorité: 03.01.2014 FR 1450031
(43) Date de publication de la demande: 09.11.2016
(73) Titulaire: Arkema France, 92700 Colombes (FR)
(72) Inventeur: JOUSSET, Dominique, F-78380 Bougival (FR); AUSSEDAT, Grégoire, 75009 Paris (FR); BIZET, Stéphane, F-27170 Barc (FR)
(74) Mandataire: Albani, Dalila
(86) Numéro de dépôt international: PCT/FR2014/053339
(87) Numéro de publication internationale: WO 2015/101730

(56) Documents cités:
- FR-A1- 2 918 380

## Description

### Domaine de l'invention

L'invention a pour objet une composition thermoplastique à base de polypropylène et d'une polyoléfine greffée polyamide, le mélange étant idéalement nanostructurée. Plus particulièrement, la composition selon l'invention se décline selon deux variantes, dans l'une le taux de polypropylène est très élevé (≥ 60%) et dans l'autre, inversement, le taux de polyoléfine greffé polyamide est très élevé (≥ 50%).

L'invention se rapporte également à une structure multicouche dans laquelle au moins une des couches est constituée par la composition selon l'invention.

### Etat de l'art

Il est décrit dans le document WO 02/28959 un copolymère greffé à blocs polyamides sur un tronc en polyoléfine qui est choisi parmi les copolymères éthylène/anhydride maléique et éthylène/(méth)acrylate d'alkyle/anhydride maléique, formant un alliage co-continu nanostructuré; cela confère à ce terpolymère/copolymère des propriétés thermomécaniques exceptionnelles, qui sont maintenues en redispersant ce copolymère greffé dans des polyoléfines souples telles que les polymères souples de l'éthylène.

De tels mélanges trouvent des applications comme adhésifs, films, bâches, produits calandrés, câbles électriques ou poudres pour des procédés de moulage d'objets ("slush molding"). Dans le document WO 2006/085007, une telle composition était utilisée pour constituer une couche de protection thermique d'un substrat subissant des températures supérieures à 150°Celsius (°C).

Ces matériaux sont dits nanostructurés, tels que définis dans les deux documents brevet susmentionnés, ce qui leur confère des propriétés intéressantes au niveau de leurs faibles niveaux de dureté (compris entre 82 et 95 shore A) et de leurs bonnes tenues thermomécaniques au-delà du point de fusion de la phase polyoléfine.

Malheureusement, ces composés très performants présentent des inconvénients lorsqu'ils sont présents en quantité importante, à savoir lorsqu'ils forment la matrice d'une composition thermoplastique, et plus particulièrement lorsqu'il est exigé de cette composition une rigidité certaine ainsi qu'une imperméabilité absolue à l'eau ou une faible reprise en humidité.

Lorsque ces mêmes composés sont utilisés en faible quantité dans une matrice polyoléfine, il n'est malheureusement pas évident qu'ils puissent conférer une propriété intéressante à cette matrice. Un critère est particulièrement important dans certaines applications, il s'agit du fluage. Or, il a été constaté qu'un mélange de ces composés avec un polyéthylène, et plus spécifiquement un polyéthylène haute densité (PEHD), n'est pas très satisfaisant au regard de ce critère de fluage notamment à des températures supérieures à 140°C. Une telle composition thermoplastique est connue du document EP 2196489 déposé au nom de la demanderesse.

Ainsi, il n'est pas évident de mélanger un tel copolymère greffé à blocs polyamides sur un tronc en polyoléfine avec une autre polyoléfine car la composition résultante présente très souvent de mauvaises propriétés physico-chimiques et de rigidité.

On citera également le document FR 2918380 qui divulgue une tentative de mélange du susdit copolymère avec deux autres polymères, dont des EPDMs (ne disposant d'aucune fonction chimique réactive), mais une telle composition est souple et présente un module d'Young inférieur à 100 MPa (MégaPascal), ce qui exclut ce type de formulation pour des applications ou une certaine rigidité est requise. De plus, les propriétés de résistance au vieillissement, notamment aux UV, d'une telle composition avec EPDM est très médiocre. Plus précisément, l'exemple 2 divulgué dans ce document ne résisterait pas en fluage car l'EPDM ne serait pas réticulé.

Il est ainsi recherché une composition thermoplastique avec un copolymère greffé à blocs polyamide sur un tronc polyoléfine et une polyoléfine qui soient à la fois rigide et ultra-performante en terme de qualité/propriété mécanique et thermomécanique.

### Brève description de l'invention

Il a été constaté par la demanderesse, après diverses expériences et manipulations, que, contrairement aux enseignements bien connus de l'homme du métier, une composition nanostructurée co-continue comportant des quantités déterminées d'un autre polymère polyoléfine, présente, en fonction de la proportion de l'un par rapport à l'autre, des propriétés de fluage particulièrement améliorées ou une perméabilité à l'eau excellente, tout en conservant un module d'Young (rigidité) élevé et des propriétés physico-chimiques très satisfaisantes (notamment au regard du vieillissement dans le temps et de la dégradation aux UVs).

Ainsi, la présente invention concerne une composition thermoplastique consistant en un mélange de polymères, consistant en :
- un premier polymère consistant en du polypropylène, présent entre 10% et 90% en poids du mélange,
- un second polymère consistant en un tronc en polyoléfine contenant un reste d'au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation, ce second polymère étant présent entre 10% et 90% en poids du mélange ; et
- un troisième polymère consistant en un polypropylène greffé anhydride maléique, entre 0,1% et 20% du mélange ; et
- éventuellement un adjuvant fonctionnel, entre 0% et 30% en poids de la composition ; et
en ce que la composition présente un module d'Young à 23°C supérieur ou égal à 400 Mpa.

D'autres caractéristiques avantageuses de l'invention sont précisées dans la suite :
- avantageusement, dans le second polymère, le monomère insaturé (X) est l'anhydride maléique.
- selon un aspect particulièrement intéressant de l'invention, le susdit polymère greffé, à savoir le susdit second polymère, est nanostructuré.
- de préférence, concernant le second polymère, la masse molaire en nombre des susdits greffons polyamide du susdit polymère greffé est comprise dans la gamme allant de 1000 à 10000 g/mole, de préférence comprise entre 1000 et 5000 g/mole.
- de préférence, concernant le second polymère, les greffons en polyamide comprennent au moins un copolyamide, par exemple 6/11 mono NH₂, et/ou un polyamide 6 monofonctionnel NH₂ et/ou un polyamide 11 monofonctionnel NH₂.
- le premier polymère est choisi parmi un polypropylène homopolymère, un polypropylène copolymère hétérogène ou statistique.
- avantageusement, le susdit premier polymère est présent entre 15% et 40% en poids de la composition tandis que le second polymère est présent entre 60% et 85% en poids de la composition.
- avantageusement le susdit premier polymère est présent entre 60% et 90% en poids de la composition tandis que le second polymère est présent entre 10% et 40% en poids de la composition.
- l'adjuvant fonctionnel consiste en un ou plusieurs plastifiants, promoteurs d'adhésion, stabilisants UV et/ou absorbeurs UV, antioxydants, retardateurs de flamme, colorants/azurants, pigments et charges renforçantes.

La composition selon l'invention se divise essentiellement en deux parties, en fonction de la proportion de polypropylène par rapport à la polyoléfine greffé polyamide.

Ainsi, dans le cas où la quantité de polypropylène est supérieure ou égale à 60% en poids du mélange, la polyoléfine greffé polyamide apporte, sans dégradation d'autres propriétés/qualités, essentiellement, mais non exclusivement, à la composition de (très) bonnes propriétés de fluage notamment à des températures supérieures à la température de fusion du polypropylène. Tandis que lorsque c'est la quantité de polyoléfine greffé polyamide qui est supérieure à 50% en poids du mélange, le polypropylène apporte, sans dégradation d'autres propriétés/qualités, essentiellement, mais non exclusivement, à la composition une excellente imperméabilité à l'eau tout en conservant d'excellentes propriétés de résistance au fluage.

L'invention concerne également une multicouche, telle que notamment une couche arrière d'un module photovoltaïque ou un revêtement de câble (ou encore un réservoir essence, un tube de transport de fluide comportant une pluralité de couches adjacentes), comportant une pluralité de couches adjacentes, caractérisée en ce qu'au moins une de ces couches consiste en la composition telle que définie à l'une quelconque des revendications précédentes.

Il doit être noté que la composition selon l'invention est présentée en lien avec l'application à un module photovoltaïque (en raison en particulier des excellentes propriétés de fluage et d'imperméabilité à l'eau ainsi que des propriétés mécaniques particulières requises) mais bien entendu cette composition pourra être envisagée pour toutes autres applications où une telle composition est avantageusement utilisable, notamment dans les structures multicouches telles que par exemple les câbles (notamment les tubes de transport d'air ou de fluide), les chaussures (par exemple les skis), les films ou revêtements adhésifs.

### Description détaillée de l'invention

S'agissant du premier polymère, il consiste en du polypropylène, c'est un polypropylène homo- ou copolymère.

A titre de comonomères, on peut citer:
- les alpha oléfines, avantageusement celles ayant de 3 à 30 atomes de carbone. Des exemples de telles alphaoléfines sont les mêmes que celles citées pour le second polymère (description donnée ci-dessous) sauf à remplacer le propylène par l'éthylène dans la liste,
- les diènes

Le second polymère peut être aussi un copolymère à blocs polypropylène.

A titre d'exemple de polymère, on peut citer :
- le polypropylène
- les mélanges de polypropylène et d'EPDM (« ethylene propylene diene monomer ») ou d'EPR (« Ethylene Propylene Rubber »), bien connus de l'homme du métier, pouvant contenir en outre 1% à 20% de polyéthylène.

S'agissant du tronc polyoléfine du second polymère greffé polyamide, c'est un polymère comprenant comme monomère une α-oléfine.

On préfère les α-oléfines ayant de 2 à 30 atomes de carbone.

A titre d'a-oléfine, on peut citer l'éthylène, le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1-eicocène, 1-dococène, 1-tétracocène, 1-hexacocène, 1-octacocène, et 1-triacontène.

On peut également citer les cyclo-oléfines ayant de 3 à 30 atomes de carbone, préférentiellement de 3 à 20 atomes de carbone, tels que le cyclopentane, le cycloheptène, le norbornène, le 5-méthyl-2-norbomène, le tétracyclododécène, et le 2-méthyl-1,4,5,8-diméthano-1,2,3,4,4a,5,8,8a-octahydronaphthalène ; di et polyoléfines, telles que la butadiène, l'isoprène, le 4-méthyl-1,3-pentadiène, le 1,4-pentadiène, 1,5-hexadiène, 1,3-hexadiène, 1,3-octadiène, 1,4-octadiène, 1,5-octadiène, 1,6-octadiène, l'éthylidènenorbomène, le vinyle norbornène, le dicyclopentadiène, le 7-méthyl-1,6-octadiène, le 4-éthylidiène-8-méthyl-1,7-nonadiène, et le 5,9-diméthyl-1,4,8-décatriène ; les composés vinyliques aromatiques tels que le mono- ou poly alkylstyrènes (comprenant le styrène, o-méthylstyrène, m-méthylstyrène, p-méthylstyrène, o,p-diméthylstyrène, o-éthylstyrène, m-éthylstyrène et p-éthylstyrène), et les dérivés comprenant des groupes fonctionnels tels que le méthoxystyrène, l'éthoxystyrène, l'acide benzoïque vinylique, le benzoate de méthyle vinyle, l'acétate de benzyle vinyle, l'hydroxystyrène, l'o-chlorostyrène, le p-chlorostyrène, le di-vinyle benzène, le 3-phénylpropène, le 4-phénylpropène, le α-méthylstyrène, le vinyle chloride, le 1,2-difluoroéthylène, le 1,2-dichloroéthylène, le tétrafluoroéthylène, et le 3,3,3-trifluoro-1-propène.

Dans le cadre de la présente invention, le terme d'a-oléfine comprend également le styrène. On préfère le propylène et tout spécialement l'éthylène comme α-oléfine.

Cette polyoléfine peut-être un homopolymère lorsqu'une seule α-oléfine est polymérisée dans la chaîne polymère. On peut citer comme exemples le polyéthylène (PE) ou le polypropylène (PP).

Cette polyoléfine peut aussi être un copolymère lorsqu'au moins deux comonomères sont copolymérisés dans la chaîne polymère, l'un des deux comonomères dit le « premier comonomère » étant une α-oléfine et l'autre comonomère, dit « deuxième comonomère », est un monomère capable de polymériser avec le premier monomère.

A titre de deuxième comonomère, on peut citer :
- une des α-oléfines déjà citées, celle-ci étant différente du premier comonomère α-oléfine,
- les diènes tels que par exemple le 1,4-hexadiène, l'éthylidène norbornène, le butadiène
- les esters d'acides carboxyliques insaturés tels que par exemple les acrylates d'alkyle ou les méthacrylates d'alkyle regroupés sous le terme (méth)acrylates d'alkyles. Les chaînes alkyles de ces (méth)acrylates peuvent avoir jusqu'à 30 atomes de carbone. On peut citer comme chaînes alkyles le méthyle, l'éthyle, le propyl, n-butyl, sec-butyl, isobutyl, tert-butyl, pentyl, hexyl, heptyl, octyl, 2-ethylhexyl, nonyl, decyl, undecyl, dodecyl, tridecyl, tetradecyl, pentadecyl, hexadecyl, heptadecyl, octadecyl, nonadecyl, eicosyl, hencosyl, docosyl, tricosyl, tetracosyl, pentacosyl, hexacosyl, heptacosyl, octacosyl, nonacosyl. On préfère les (méth)acrylates de méthyle, éthyle et butyle comme esters d'acide carboxylique insaturés.
- les esters vinyliques d'acide carboxyliques. A titre d'exemples d'esters vinyliques d'acide carboxylique, on peut citer l'acétate de vinyle, le versatate de vinyle, le propionate de vinyle, le butyrate de vinyle, ou le maléate de vinyle. On préfère l'acétate de vinyle comme ester vinylique d'acide carboxylique.

Avantageusement, le tronc en polyoléfine comprend au moins 50 % en moles du premier comonomère ; sa densité peut être avantageusement comprise entre 0,91 et 0,96.

Les troncs polyoléfines préférés sont constitués d'un copolymère éthylène-(méth)acrylate d'alkyle. En utilisant ce tronc polyoléfine, on obtient une excellente tenue au vieillissement à la lumière et à la température.

On ne sortirait pas du cadre de l'invention si différents « deuxièmes comonomères » étaient copolymérisés dans le tronc polyoléfine.

Selon la présente invention, le tronc polyoléfine contient au moins un reste de monomère insaturé (X) pouvant réagir sur une fonction acide et/ou amine du greffon polyamide par une réaction de condensation. Selon la définition de l'invention, le monomère insaturé (X) n'est pas un « deuxième comonomère ».

Comme monomère insaturé (X) compris sur le tronc polyoléfine, on peut citer :
- les époxydes insaturés. Parmi ceux-ci, ce sont par exemple les esters et éthers de glycidyle aliphatiques tels que l'allylglycidyléther, le vinylglycidyléther, le maléate et l'itaconate de glycidyle, l'acrylate et le méthacrylate de glycidyle. Ce sont aussi par exemple les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo(2,2,1)-5-heptène-2,3-diglycidyl dicarboxylate. On préfère utiliser le méthacrylate de glycidyle comme époxyde insaturé.
- les acides carboxyliques insaturés et leurs sels, par exemple l'acide acrylique ou l'acide méthacrylique et les sels de ces mêmes acides.
- les anhydrides d'acide carboxylique. Ils peuvent être choisis par exemple parmi les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On préfère utiliser l'anhydride maléique comme anhydride d'acide carboxylique.

Le monomère insaturé (X) est de préférence un anhydride d'acide carboxylique insaturé.

Selon une version avantageuse de l'invention, le nombre préféré de monomère insaturé (X) fixé en moyenne sur le tronc polyoléfine est supérieur ou égal à 1,3 et/ou préférentiellement inférieur ou égal à 20.

Ainsi, si (X) est l'anhydride maléique et la masse molaire en nombre de la polyoléfine est 15 000 g/mol, on a trouvé que ceci correspondait à une proportion d'anhydride d'au moins 0,8 % en masse de l'ensemble du tronc de polyoléfine et d'au plus 6,5%. Ces valeurs associées à la masse des greffons polyamide déterminent la proportion de polyamide et de tronc dans le polymère greffé polyamide.

Le tronc polyoléfine contenant le reste du monomère insaturé (X) est obtenu par polymérisation des monomères (premier comonomère, deuxième comonomère éventuel, et éventuellement monomère insaturé (X)). On peut réaliser cette polymérisation par un procédé radicalaire à haute pression ou un procédé en solution, en réacteur autoclave ou tubulaire, ces procédés et réacteurs étant bien connus de l'homme du métier. Lorsque le monomère insaturé (X) n'est pas copolymérisé dans le tronc polyoléfine, il est greffé sur le tronc polyoléfine. Le greffage est également une opération connue en soi. La composition serait conforme à l'invention si plusieurs monomères fonctionnels (X) différents étaient copolymérisés et/ou greffés sur le tronc polyoléfine.

Selon les types et ratio de monomères, le tronc polyoléfine peut être semi-cristallin ou amorphe. Dans le cas des polyoléfines amorphes, seule la température de transition vitreuse est observée, tandis que dans celui des polyoléfines semi-cristallins une température de transition vitreuse et une température de fusion (qui sera nécessairement supérieure) sont observées. Il suffira à l'homme du métier de sélectionner les ratios de monomère et les masses moléculaires du tronc polyoléfine pour pouvoir obtenir aisément les valeurs voulues de température de transition vitreuse, éventuellement de température de fusion ainsi que de viscosité du tronc polyoléfine.

De manière préférée, la polyoléfine a un Melt Flow Index (MFI) compris entre 0,5 et 400 g/10min (190°C, 2,16kg, ASTM D 1238).

Les greffons polyamide peuvent être soit des homopolyamides, soit des copolyamides.

Sont notamment visés par l'expression "greffons polyamides" les homopolyamides aliphatiques qui résultent de la polycondensation :
- d'un lactame,
- ou d'un acide alpha, omega-aminocarboxylique aliphatique,
- ou d'une diamine aliphatique et d'un diacide aliphatique.

A titre d'exemples de lactame, on peut citer le caprolactame, l'oenantholactame et le lauryllactame.

A titre d'exemples d'acide alpha, omega-aminocarboxylique aliphatique, on peut citer l'acide aminocaproïque, l'acide amino-7-heptanoïque, l'acide amino-11-undécanoïque et l'acide amino-12-dodécanoïque.

A titre d'exemples de diamine aliphatique, on peut citer l'hexa-méthylènediamine, la dodécaméthylènediamine et la triméthylhexaméthylène diamine.

A titre d'exemples de diacide aliphatique, on peut citer les acides adipique, azélaïque, subérique, sébacique et dodécanedicarboxylique.

Parmi les homopolyamides aliphatiques, on peut citer, à titre d'exemple et de façon non limitative, les polyamides suivants : le polycaprolactame (PA6) ; le polyundécanamide (PA11, commercialisé par ARKEMA sous la marque Rilsan®) ; le polylauryllactame (PA12, également commercialisé par ARKEMA sous la marque Rilsan®) ; le polybutylène adipamide (PA4.6) ; le polyhexaméthylène adipamide (PA6.6) ; le polyhexaméthylène azélamide (PA6.9) ; le polyhexaméthylène sébaçamide (PA-6.10) ; le polyhexaméthylène dodécanamide (PA6.12) ; le polydécaméthylène dodécanamide (PA10.12) ; le polydécaméthylène sébaçanamide (PA10.10) et le polydodecaméthylène dodécanamide (PA12.12).

Sont également visés par l'expression "polyamides semi-cristallins" les homopolyamides cycloaliphatiques.

On peut notamment citer les homopolyamides cycloaliphatiques qui résultent de la condensation d'une diamine cycloaliphatique et d'un diacide aliphatique.

A titre d'exemple de diamine cycloaliphatique, on peut citer la 4,4'-méthylene-bis(cyclohexylamine), encore dénommée para-bis(aminocyclo-hexyl)méthane ou PACM, la 2,2'-diméthyl-4,4'méthylène-bis(cyclo-hexyl-amine), encore dénommée bis-(3-méthyl-4-aminocyclohexyl)-méthane ou BMACM.

Ainsi, parmi les homopolyamides cycloaliphatiques, on peut citer les polyamides PACM.12, résultant de la condensation du PACM avec le diacide en C12, les BMACM.10 et BMACM.12 résultant de la condensation de la BMACM avec, respectivement, les diacides aliphatiques en C10 et en C12.

Sont également visés par l'expression "greffons polyamide" les homopolyamides semi-aromatiques qui résultent de la condensation :
- d'une diamine aliphatique et d'un diacide aromatique, tel que l'acide téréphtalique (T) et l'acide isophtalique (I). Les polyamides obtenus sont alors couramment appelés "polyphtalamides" ou PPA ;
- d'une diamine aromatique, telle que la xylylènediamine, et plus particulièrement la métaxylylènediamine (MXD) et d'un diacide aliphatique.

Ainsi, et de manière non limitative, on peut citer les polyamides 6.T, 6.I, MXD.6 ou encore MXD.10.

Les greffons polyamide rentrant en jeu dans la composition selon l'invention peuvent également être des copolyamides. Ceux-ci résultent de la polycondensation d'au moins deux des groupes de monomères énoncés ci-dessus pour l'obtention d'homopolyamides. Le terme « monomère » dans la présente description des copolyamides doit être pris au sens d' « unité répétitive ». En effet, le cas où une unité répétitive du PA est constituée de l'association d'un diacide avec une diamine est particulier. On considère que c'est l'association d'une diamine et d'un diacide, c'est-à-dire le couple diamine-diacide (en quantité équimolaire), qui correspond au monomère. Ceci s'explique par le fait qu'individuellement, le diacide ou la diamine n'est qu'une unité structurale, qui ne suffit pas à elle seule à polymériser pour donner un polyamide.

Ainsi, les copolyamides couvrent notamment les produits de condensation :
- d'au moins deux lactames,
- d'au moins deux acides alpha, omega-aminocarboxyliques aliphatiques,
- d'au moins un lactame et d'au moins un acide alpha, omega-aminocarboxylique aliphatique,
- d'au moins deux diamines et d'au moins deux diacides,
- d'au moins un lactame avec au moins une diamine et au moins un diacide,
- d'au moins un acide alpha,omega-aminocarboxylique aliphatique avec au moins une diamine et au moins un diacide,
la(les) diamine(s) et le(s) diacide(s) pouvant être, indépendamment l'un de l'autre, aliphatiques, cycloaliphatiques ou aromatiques.

Selon les types et ratio de monomères, les copolyamides peuvent être semi-cristallins ou amorphes. Dans le cas des copolyamides amorphes, seule la température de transition vitreuse est observée, tandis que dans celui des copolyamides semi-cristallins une température de transition vitreuse et une température de fusion (qui sera nécessairement supérieure) sont observées.

Parmi les copolyamides amorphes que l'on peut utiliser dans le cadre de l'invention, on peut citer par exemple les copolyamides contenant des monomères semi-aromatiques.

Parmi les copolyamides, on pourra également utiliser les copolyamides semi-cristallins et particulièrement ceux de type PA 6/11, PA6/12 et PA6/11/12.

Le degré de polymérisation peut varier dans de larges proportions, selon sa valeur c'est un polyamide ou un oligomère de polyamide.

Avantageusement, les greffons polyamide sont mono fonctionnels.

Pour que le greffon polyamide ait une terminaison monoamine, il suffit d'utiliser un limiteur de chaîne de formule : 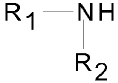 dans laquelle :
- R1 est l'hydrogène ou un groupement alkyle linéaire ou ramifié contenant jusqu'à 20 atomes de carbone,
- R2 est un groupement ayant jusqu'à 20 atomes de carbone alkyle ou alcényle linéaire ou ramifié, un radical cycloaliphatique saturé ou non, un radical aromatique ou une combinaison des précédents. Le limiteur peut être, par exemple, la laurylamine ou l'oleylamine.

Pour que le greffon polyamide ait une terminaison monoacide carboxylique, il suffit d'utiliser un limiteur de chaîne de formule R'1-COOH, R'1-CO-O-CO-R'2 ou un diacide carboxylique.

R'1 et R'2 sont des groupements alkyles linéaires ou ramifiés contenant jusqu'à 20 atomes de carbone.

Avantageusement, le greffon polyamide possède une extrémité à fonctionnalité amine. Les limiteurs monofonctionnels de polymérisation préférés sont la laurylamine et l'oléylamine.

Les greffons polyamide ont une masse molaire comprise entre 1000 et 10000 g/mole, de préférence comprise entre 1000 et 5000 g/mole.

La polycondensation peut être utilisée pour procéder au greffage des greffons de polyamide et s'effectue selon les procédés habituellement connus, par exemple à une température comprise en général entre 200 et 300°C, sous vide ou sous atmosphère inerte, avec agitation du mélange réactionnel. La longueur de chaîne moyenne du greffon est déterminée par le rapport molaire initial entre le monomère polycondensable ou le lactame et le limiteur monofonctionnel de polymérisation. Pour le calcul de la longueur de chaîne moyenne, on compte habituellement une molécule de limiteur de chaîne pour une chaîne de greffon.

Il suffira à l'homme du métier de sélectionner les types et ratio de monomères ainsi que choisir les masses molaires des greffons polyamide pour pouvoir obtenir aisément les valeurs voulues de température de transition vitreuse, éventuellement de température de fusion ainsi que de viscosité du greffon polyamide.

La réaction de condensation du greffon polyamide sur le tronc de polyoléfine contenant le reste de X (ou le monomère fonctionnalisé pour le second copolymère greffé, à savoir le copolymère élastomère) s'effectue par réaction d'une fonction amine ou acide du greffon polyamide sur le reste de X. Avantageusement, on utilise des greffons polyamide monoamine et on crée des liaisons amides ou imides en faisant réagir la fonction amine sur la fonction du reste de X.

On réalise cette condensation de préférence à l'état fondu. Pour fabriquer la composition selon l'invention, on peut utiliser les techniques classiques de malaxage et/ou d'extrusion. Les composants de la composition sont ainsi mélangés pour former un compound qui pourra éventuellement être granulé en sortie de filière. Avantageusement, des agents de couplage sont ajoutés lors du compoundage.

Pour obtenir une composition nanostructurée, on peut ainsi mélanger le greffon polyamide et le tronc dans une extrudeuse, à une température généralement comprise entre 200 et 300 °C. Le temps de séjour moyen de la matière fondue dans l'extrudeuse peut être compris entre 5 secondes et 5 minutes, et de préférence entre 20 secondes et 1 minute. Le rendement de cette réaction de condensation est évalué par extraction sélective des greffons de polyamide libres, c'est-à-dire ceux qui n'ont pas réagi pour former le polymère greffé polyamide.

La préparation de greffons polyamide à extrémité amine ainsi que leur addition sur un tronc de polyoléfine contenant le reste de (X) ou d'un monomère fonctionnalisé (second copolymère) est décrite dans les brevets US3976720, US3963799, US5342886 et FR2291225. Le polymère greffé polyamide de la présente invention présente avantageusement une organisation nanostructurée.

S'agissant du troisième polymère optionnel, il consiste en une polyoléfine fonctionnalisée apte à servir d'agent de compatibilisation entre le polypropylène et la polyoléfine greffée polyamide. La description de cette polyoléfine greffée est similaire au tronc polyoléfine utilisé dans la polyoléfine greffée polyamide.

On entend par l'expression « polyoléfine fonctionnelle » une polyoléfine qui inclut dans sa chaine une ou plusieurs fonctions chimiques réactives telle que classiquement les époxydes, les acides et les anhydrides maléiques. Cette expression est bien connue de l'homme du métier qui est apte à identifier les polyoléfines appartenant à ce groupe ou non. Un EPDM ne répond pas à cette définition.

Selon l'invention, la polyoléfine fonctionnalisée est un polypropylène greffé anhydride maléique.

Concernant l'adjuvant fonctionnel, optionnel, il peut être présent dans la composition à une hauteur maximum de 30% en poids de la composition et sera choisis limitativement parmi les composés mentionnés ci-après ou un mélange de ces composés.

Des plastifiants pourront être ajoutés à la composition selon l'invention afin de faciliter la mise en œuvre et améliorer la productivité du procédé de fabrication de la composition et des structures. On citera comme exemples les huiles minérales paraffiniques aromatiques ou naphtaléniques qui permettent également d'améliorer le pouvoir d'adhérence de la composition selon l'invention. On peut également citer comme plastifiant les phtalates, azelates, adipates, le phosphate de ticrésyle.

De la même manière, des promoteurs d'adhésion, bien que non nécessaires, peuvent être avantageusement ajoutés afin d'améliorer le pouvoir d'adhérence de la composition lorsque celui-ci doit être particulièrement élevé. Le promoteur d'adhésion est un ingrédient non polymérique ; il peut être organique, cristallin, minéral et plus préférentiellement semi-minéral semi-organique. Parmi ceux-ci, on peut citer les titanates ou les silanes organiques, comme par exemple les monoalkyl titanates, les trichlorosilanes et les trialkoxysilanes, les trialcooxysilane. On pourra également prévoir que ces promoteurs d'adhésion sont directement greffés sur le premier ou le second copolymère par une technique bien connue de l'homme du métier, par exemple via l'extrusion réactive.

Le rayonnement UV étant susceptible d'entraîner un léger jaunissement des compositions thermoplastiques, des stabilisants UV et des absorbeurs UV (ces composés étant dénommés de manière générale des agents anti-UVs) tels que le benzotriazole, le benzophénone et les autres amines encombrés, peuvent être ajoutés dans certaines applications où un tel phénomène doit être évité. Ces composés peuvent être par exemple à base de benzophénone ou de benzotriazole. On peut les ajouter dans des quantités inférieures à 10% en masse de la masse totale de la composition et préférentiellement de 0,1 à 5%.

On pourra également ajouter des anti-oxydants pour limiter le jaunissement lors de la fabrication de la composition tels que les composés phosphorés (phosphonites et/ou phosphites) et les phénoliques encombrés. On peut ajouter ces anti-oxydants dans des quantités inférieures à 10% en masse de la masse totale de la composition et préférentiellement de 0,05 à 5%.

De la même manière, dans certaines applications, des agents retardateurs de flamme peuvent également être ajoutés à la composition selon l'invention. Ces agents peuvent être halogénés ou non-halogénés. Parmi les agents halogénés, on peut citer les produits bromés. On peut également utiliser comme agent non-halogéné les additifs à base de phosphore tels que le polyphosphate d'ammonium, les phosphinates et phosphonates d'aluminium, le cyanurate de mélamine, le pentaérythritol, les zéolithes ainsi que les mélanges de ces agents. La composition peut comprendre ces agents dans des proportions allant de 3 à 30% par rapport à la masse totale de la composition. On pourra également ajouter des composés colorants ou azurants.

On peut également ajouter à la composition des pigments comme par exemple du dioxyde de titane ou de l'oxyde de zinc dans des proportions allant généralement de 5 à 15% par rapport à la masse totale de la composition.

On peut également ajouter à la composition des charges renforçantes telles que le talc, les fibres de verre, les fibres de carbone, les montmorillonites, les nanotubes de carbone, le noir de carbone, dans des proportions allant généralement de 2,5 à 30% par rapport à la masse totale de la composition.

### Préparation de la composition selon l'invention :

Comme cela a été mentionné précédemment, la technique de greffage des greffons polyamide sur le tronc polyoléfine pour obtenir la polyoléfine greffé polyamide selon l'invention est bien connu de l'homme du métier, et notamment des documents cités précédemment FR 2912150, FR 2918150 ou EP 21966489.

Le polypropylène, l'adjuvant fonctionnel (additif cités ci-dessus) ainsi que la polyoléfine fonctionnalisée, sont parfaitement connus de l'homme du métier ainsi que leurs obtentions. Le mélange de ces composés, est tout à fait classique et ne requiert aucune explication spécifique pour l'homme du métier.

On ne sort donc pas du cadre de l'invention si des agents réticulant sont ajoutés. On peut citer comme exemples des isocyanates ou des peroxydes organiques. Cette réticulation peut également être réalisée par des techniques connues d'irradiation. Cette réticulation peut être effectuée par l'une des nombreuses méthodes connues de l'homme du métier, notamment par l'utilisation d'initiateurs activés thermiquement, par exemple des composés peroxydes et azo, des photoinitiateurs tels que le benzophénone, par des techniques de radiation comportant des rayons lumineux, des rayons UV, des faisceaux d'électrons et des rayons X, de silanes porteurs de fonctions réactives comme un amino silane, un époxy silane, un vinyle silane tel que par exemple le vinyle silane tri-éthoxy ou tri-méthoxy, et de la réticulation par voie humide. Le manuel intitulé « Handbook of polymer foams and technology » supra, aux pages 198 à 204, fournit des enseignements complémentaires auxquels l'homme du métier peut se référer.

### Matériaux employés pour former les formulations testées :

**Lotader® 4210:** terpolymère d'éthylène, d'acrylate d'éthyle (6,5 % en poids) et d'anhydride maléique (3,6 % en poids) produit par ARKEMA possédant un MFI (190°C sous 2,16 kg mesuré selon ISO 1133) de 9g/10m.
**PPH 4060 :** Polypropylène homopolymère commercialisé par la société Total possédant un MFI (230°C sous 2,16 kg mesuré selon ISO 133) de 3 g/10 mn.
**PPC 3650 :** Polypropylène copolymère hétérophasique commercialisé par la société Total possédant un MFI (230°C sous 2,16 kg mesuré selon ISO 133) de 1,3 g/10 mn.
**Orevac® CA100** : Polypropylène fonctionnalisé anhydride maléique commercialisée par Arkema possédant un MFI (190°C sous 0,325 kg mesuré selon ISO 1133) de 10g/10mn
**Talc HAR T77 :** commercialisé par la société Imerys
**Fibres de verre CSX 3J-451 WD** : commercialisées par la société Nittobo
**Dioxyde de Titane Kronos 2073** : commercialisé par la société Kronos
**TPV PP/EPDM réticulé** : Elastomère thermoplastique constitué de 35% en poids d'un polypropylène de MFI (à 230°C sous 2,16 kg) 2 g/10mn et de 65% en poids d'un EPDM réticulé avec un système à base de résine phénolique et comprenant 150 pcr d'huile aliphatique. La composition exacte de l'EPDM est décrite dans la composition de l'exemple 1 de la demande de brevet FR 2918380.
**HDPE M40053S** : Polyéthylène de haute densité commercialisé par la société SABIC possédant un MFI (190°C sous 2,16 kg mesuré selon ISO 133) de 4,0 g/10mn.
**Prépolymère Polyamide** : prépolymère polyamide 6 mono NH2 de Mn 2500 g/mole, produit par la demanderesse. Ce prépolymère a été synthétisé par polycondensation à partir du lactame 6. La laurylamine est utilisée comme limitateur de chaîne de façon à avoir une seule fonctionnalité amine primaire en bout de chaîne. La masse molaire moyenne en nombre du prépolymère est de 2500 g/mol.

### Obtention des formulations et films testés :

Les formulations ont été préparées par « compoundage » grâce à une extrudeuse double vis co-rotative de type Leistritz® (L/D=35) dont les éléments de fourreaux sont chauffés selon un profil plat à 240°C ; la vitesse de rotation est de 300 rpm (« round per minute » ou tour par minute) avec un débit de 15 kg/h (kilogramme par heure).

Des films monocouches de 350 µm (micromètre) des compositions ont été réalisés par extrusion de film à plat sur une petite ligne d'extrusion de laboratoire. L'extrudeuse est une bi-vis contrarotative de type Haake 1 équipée d'une filière plate de 10 cm (centimètre) de large et de 0,5 mm (millimètre) d'ouverture. Les éléments de fourreaux sont chauffés selon un profil plat à 230°C, la vitesse de rotation des vis étant de 60 rpm (tour par minute ou « round per minute »).

| Composition n° | Lotader® 4210 (% pds composition) | Prépolymère PA6 | PPH 4060 | PPC 3650 | Orevac® CA 100 | Fibre verre | Talc | Dioxyde de Titane |
|---|---|---|---|---|---|---|---|---|
| 1 | 57 | 25,5 | 10 | | 7,5 | | | |
| 2 | 50 | 22,5 | 20 | | 7,5 | | | |
| 3 | 49 | 21 | 22,5 | | 7,5 | | | |
| 4 | 42 | 18 | 32,5 | | 7,5 | | | |
| 5 | 35 | 15 | 42,5 | | 7,5 | | | |
| 6 | 28 | 12 | 52,5 | | 7,5 | | | |
| 7 | 21 | 9 | 62,5 | | 7,5 | | | |
| 8 | 14 | 6 | 72,5 | | 7,5 | | | |
| 9 | 7 | 3 | 82,5 | | 7,5 | | | |
| 10 | 49 | 21 | | 22,5 | 7,5 | | | |
| 11 | 42 | 18 | | 32,5 | 7,5 | | | |
| 12 | 42 | 18 | 32,5 | | 7,5 | | | |
| 13 | 39,9 | 17,1 | 30,5 | | 7,5 | 5 | | |
| 14 | 35 | 15 | 32,5 | | 7,5 | | 10 | |
| 15 | 35 | 15 | 32,5 | | 7,5 | | | 10 |

| Composition n° | Lotader® 4210 (% pds composition) | Prépolymère PA6 | PPH 4060 | HDPE | TPV PP/EPDM |
|---|---|---|---|---|---|
| 16 (comparatif) | 66,5 | 28,5 | 5 | | |
| 17 (comparatif) | 3,5 | 1,5 | 95 | | |
| 18 (comparatif) | 70 | 30 | | | |
| 19 (comparatif) | 50 | 30 | | 20 | |
| 20 (comparatif) | 17,5 | 7,5 | | | 75 |

### Tests réalisés sur les films :

Trois types de tests ont été principalement réalisés sur les compositions 1 à 16 afin de tester la résolution éventuellement des problèmes techniques susmentionnés mais il doit être noté que les compositions selon l'invention présentent par ailleurs d'autres propriétés particulièrement intéressantes.

Ces trois tests consistent d'une part à mesurer le module d'Young à 23°C, exprimé en MégaPascal (MPa), à mesurer la perméabilité à l'eau à température ambiante et enfin à déterminer les propriétés de fluage.

### Test du « Module d'Young »:

Pour mesurer le Module d'Young des éprouvettes de compositions, on réalise un essai en traction selon la norme NF EN ISO 527.

### Test d'imperméabilité à l'eau :

On réalise ce test avec de la vapeur d'eau selon la norme ISO 1663 de 1999 (ex NF T 56-105), équivalent à la norme ASTM E96-80. Cette méthode donne un taux d'humidité relative dans l'éprouvette considérée.

### Test de fluage :

La résistance au fluage est déterminée à partir d'éprouvettes de type IFC découpées dans les films. Un poids est appliqué à une extrémité de l'éprouvette correspondant à une contrainte de 2 Bars soit 0,2 MPa. La contrainte est appliquée pendant 15 minutes à une température de 150°C, 160° C ou 170°C selon la composition. La déformation résiduelle est mesurée après retour à température ambiante.

| Composition n° | Module d'Young (MPa) | Fluage (déformation en %) | | | Perméabilité à l'eau (g/m²/24h) |
|---|---|---|---|---|---|
| | | 150°C | 160°C | 170°C | |
| 1 | 500 | | | 30 | 80 |
| 2 | 600 | | | 35 | 70 |
| 3 | 675 | | | 36 | 63 |
| 4 | 810 | | | 40 | 50 |
| 5 | 965 | | | 55 | 41 |
| 6 | 1140 | | | 85 | 24 |
| 7 | 1340 | | | 115 | 19 |
| 8 | 1565 | | | 195 | 15 |
| 9 | 1821 | | | 245 | 12 |
| 10 | 640 | | | 30 | 66 |
| 11 | 750 | | | 40 | 58 |
| 12 | 750 | | | 35 | 50 |
| 13 | 1260 | | | 35 | 56 |
| 14 | 1210 | | | 35 | 38 |
| 15 | 850 | | | 40 | 48 |
| 16 (comparatif) | 415 | | | 25 | 90 |
| 17 (comparatif) | 1951 | | | >300 | 12 |
| 18 (comparatif) | 375 | 7,5 | 15 | 25 | 95 |
| 19 (comparatif) | 2100 | | | >300 | 11 |
| 20 (comparatif) | 510 | 10 | 45 | 100 | 70 |

Les résultats pour les trois tests réalisés sur chacune des compositions montrent clairement d'une part les avantages techniques de la composition selon l'invention, bien que ces derniers ne soient en rien prévisibles, et d'autre part les domaines préférés (% massique) pour cette composition.

## Revendications

1. Composition thermoplastique consistant en un mélange de polymères, consistant en :
• un premier polymère consistant en du polypropylène, présent entre 10% et 90% en poids du mélange,
• un second polymère consistant en un tronc en polyoléfine contenant un reste d'au moins un monomère insaturé (X) et une pluralité de greffons en polyamide, les greffons en polyamide sont attachés au tronc en polyoléfine par le reste du monomère insaturé (X) comprenant une fonction capable de réagir par une réaction de condensation avec un polyamide ayant au moins une extrémité amine et/ou au moins une extrémité acide carboxylique, le reste du monomère insaturé (X) est fixé sur le tronc par greffage ou copolymérisation, ce second polymère étant présent entre 10% et 90% en poids du mélange ; et
• un troisième polymère consistant en un polypropylène greffé anhydride maléique, entre 0,1% et 20% du mélange ; et
• éventuellement un adjuvant fonctionnel, entre 0% et 30% en poids de la composition ; et
• en ce que la composition présente un module d'Young à 23°C supérieur ou égal à 400 MPa.

2. Composition selon la revendication 1, **caractérisée en ce que**, dans le second polymère, le monomère insaturé (X) est l'anhydride maléique.

3. Composition selon l'une quelconque des revendications précédentes, **caractérisée en ce que** le susdit polymère greffé, à savoir le susdit second polymère, est nanostructuré.

4. Composition selon l'une quelconque des revendications précédentes, **caractérisée en ce que**, concernant le second polymère, la masse molaire en nombre des susdits greffons polyamide du susdit polymère greffé est comprise dans la gamme allant de 1000 à 10000 g/mole, de préférence comprise entre 1000 et 5000 g/mole.

5. Composition selon l'une quelconque des revendications précédentes, **caractérisée en ce que**, concernant le second polymère, les greffons en polyamide comprennent au moins un copolyamide, par exemple 6/11 mono NH₂, et/ou un polyamide 6 mono fonctionnel NH₂ et/ou un polyamide 11 monofonctionnel NH₂.

6. Composition selon l'une quelconque des revendications précédentes, **caractérisée en ce que** le premier polymère est choisi parmi un polypropylène homopolymère, un polypropylène copolymère hétérogène ou statistique.

7. Composition selon l'une quelconque des revendications précédentes, **caractérisée en ce que** le susdit premier polymère est présent entre 15% et 40% en poids de la composition tandis que le second polymère est présent entre 60% et 85% en poids de la composition.

8. Composition selon l'une quelconque des revendications 1 à 5, **caractérisée en ce que** le susdit premier polymère est présent entre 60% et 90% en poids de la composition tandis que le second polymère est présent entre 10% et 40% en poids de la composition.

9. Composition selon l'une quelconque des revendications précédentes, **caractérisée en ce que** l'adjuvant fonctionnel consiste en un ou plusieurs plastifiants, promoteurs d'adhésion, stabilisants UV et/ou absorbeurs UV, antioxydants, retardateurs de flamme, colorants/azurants, pigments et charges renforçantes.

10. Structure multicouche, telle que notamment une couche arrière d'un module photovoltaïque ou un revêtement de câble, comportant une pluralité de couches adjacentes, **caractérisée en ce qu'**au moins une de ces couches consiste en la composition telle que définie à l'une quelconque des revendications précédentes.

## Patentansprüche

1. Thermoplastische Zusammensetzung, bestehend aus einer Mischung von Polymeren, die aus Folgendem besteht:
• einem ersten Polymer, das aus Polypropylen besteht und in einer Menge zwischen 10 und 90 Gew.-% der Mischung vorliegt,
• einem zweiten Polymer, das aus einer Polyolefin-Hauptkette, die einen Rest mindestens eines ungesättigten Monomers (X) enthält, und mehreren Polyamid-Pfropfanteilen besteht, wobei die Polyamid-Pfropfanteile über den Rest des ungesättigten Monomers (X) mit einer Funktion, die mit einem Polyamid mit mindestens einer Amin-Endgruppe und/oder mindestens einer Carbonsäure-Endgruppe durch eine Kondensationsreaktion reagieren kann, an die Polyolefin-Hauptkette gebunden sind, wobei der Rest des ungesättigten Monomers (X) durch Pfropfung oder Copolymerisation an der Hauptkette fixiert ist, wobei dieses zweite Polymer in einer Menge zwischen 10 und 90 Gew.-% der Mischung vorliegt; und
• einem dritten Polymer, das aus einem mit Maleinsäureanhydrid gepfropften Polypropylen besteht, in einer Menge zwischen 0,1 % und 20 % der Mischung; und
• gegebenenfalls einem funktionellen Adjuvans in einer Menge zwischen 0 und 30 Gew.-% der Zusammensetzung; und
• dass die Zusammensetzung einen Youngschen Elastizitätsmodul bei 23°C größer oder gleich 400 MPa aufweist.

2. Zusammensetzung nach Anspruch 1, **dadurch gekennzeichnet, dass** es sich in dem zweiten Polymer bei dem ungesättigten Monomer (X) um Maleinsäureanhydrid handelt.

3. Zusammensetzung nach einem der vorhergehenden Ansprüche, **dadurch gekennzeichnet, dass** das obige Pfropfpolymer, nämlich das obige zweite Polymer, nanostrukturiert ist.

4. Zusammensetzung nach einem der vorhergehenden Ansprüche, **dadurch gekennzeichnet, dass** in Bezug auf das zweite Polymer die zahlenmittlere Molmasse der Polyamid-Pfropfanteile des obigen Pfropfpolymers im Bereich von 1000 bis 10.000 g/mol und vorzugsweise zwischen 1000 und 5000 g/mol liegt.

5. Zusammensetzung nach einem der vorhergehenden Ansprüche, **dadurch gekennzeichnet, dass** in Bezug auf das zweite Polymer die Polyamid-Pfropfanteile mindestens ein Copolyamid, beispielsweise Mono-NH₂-copolyamid 6/11, und/oder ein monofunktionelles NH₂-Polyamid 6 und/oder ein monofunktionelles NH₂-Polyamid 11, enthalten.

6. Zusammensetzung nach einem der vorhergehenden Ansprüche, **dadurch gekennzeichnet, dass** das erste Polymer aus einem Polypropylen-Homopolymer und einem heterogenen oder statistischen Polypropylen-Copolymer ausgewählt ist.

7. Zusammensetzung nach einem der vorhergehenden Ansprüche, **dadurch gekennzeichnet, dass** das obige erste Polymer in einer Menge zwischen 15 und 40 Gew.-% der Zusammensetzung vorliegt, während das zweite Polymer in einer Menge zwischen 60 und 85 Gew.-% der Zusammensetzung vorliegt.

8. Zusammensetzung nach einem der Ansprüche 1 bis 5, **dadurch gekennzeichnet, dass** das obige erste Polymer in einer Menge zwischen 60 und 90 Gew.-% der Zusammensetzung vorliegt, während das zweite Polymer in einer Menge zwischen 10 und 40 Gew.-% der Zusammensetzung vorliegt.

9. Zusammensetzung nach einem der vorhergehenden Ansprüche, **dadurch gekennzeichnet, dass** das funktionelle Adjuvans aus einem oder mehreren Weichmachern, Haftvermittlern, UV-Stabilisatoren und/oder UV-Absorbern, Antioxidantien, Flammschutzmitteln, Farbstoffen/Aufhellern, Pigmenten und verstärkenden Füllstoffen besteht.

10. Mehrschichtstruktur, wie insbesondere eine Rückschicht eines Photovoltaikmoduls oder eine Kabelummantelung, die mehrere benachbarte Schichten umfasst, **dadurch gekennzeichnet, dass** mindestens eine dieser Schichten aus der Zusammensetzung gemäß einem der vorhergehenden Ansprüche besteht.

## Claims

1. Thermoplastic composition consisting of a blend of polymers, consisting of:
• a first polymer consisting of polypropylene, present at between 10% and 90% by weight of the blend,
• a second polymer consisting of a polyolefin backbone containing a residue of at least one unsaturated monomer (X) and a plurality of polyamide grafts; the polyamide grafts are attached to the polyolefin backbone by the residue of the unsaturated monomer (X) comprising a functional group capable of reacting by a condensation reaction with a polyamide having at least one amine end and/or at least one carboxylic acid end and the residue of the unsaturated monomer (X) is attached to the backbone by grafting or copolymerization; this second polymer being present at between 10% and 90% by weight of the blend; and
• a third polymer consisting of a maleic anhydride-grafted polypropylene, at between 0.1% and 20% of the blend; and
• optionally a functional adjuvant, at between 0% and 30% by weight of the composition; and
• in that the composition exhibits a Young's modulus at 23°C of greater than or equal to 400 MPa.

2. Composition according to Claim 1, **characterized in that**, in the second polymer, the unsaturated monomer (X) is maleic anhydride.

3. Composition according to either one of the preceding claims, **characterized in that** the abovesaid grafted polymer, namely the abovesaid second polymer, is nanostructured.

4. Composition according to any one of the preceding claims, **characterized in that**, regarding the second polymer, the number-average molar mass of the abovesaid polyamide grafts of the abovesaid grafted polymer is within the range extending from 1000 to 10 000 g/mol, preferably between 1000 and 5000 g/mol.

5. Composition according to any one of the preceding claims, **characterized in that**, regarding the second polymer, the polyamide grafts comprise at least one copolyamide, for example mono NH₂ 6/11, and/or one monofunctional NH₂ polyamide 6 and/or one monofunctional NH₂ polyamide 11.

6. Composition according to any one of the preceding claims, **characterized in that** the first polymer is chosen from a polypropylene homopolymer or a heterogeneous or random polypropylene copolymer.

7. Composition according to any one of the preceding claims, **characterized in that** the abovesaid first polymer is present at between 15% and 40% by weight of the composition while the second polymer is present at between 60% and 85% by weight of the composition.

8. Composition according to any one of Claims 1 to 5, **characterized in that** the abovesaid first polymer is present at between 60% and 90% by weight of the composition while the second polymer is present at between 10% and 40% by weight of the composition.

9. Composition according to any one of the preceding claims, **characterized in that** the functional adjuvant consists of one or more plasticizers, adhesion promoters, UV stabilizers and/or UV absorbers, antioxidants, flame retardants, dyes/brighteners, pigments and reinforcing fillers.

10. Multilayer structure, such as in particular a back layer of a photovoltaic module or a cable coating, comprising a plurality of adjacent layers, **characterized in that** at least one of these layers consists of the composition as defined in any one of the preceding claims.
